# EUROPEAN PATENT SPECIFICATION

(11) **EP 3 056 356 B1**
(45) Date of publication and mention of the grant of the patent: **27.12.2017**
(21) Application number: 16155307.8
(22) Date of filing: 11.02.2016
(51) Int. Cl.: B60C 11/00, B60C 11/01

(54) **VEHICLE TYRE WITH IMPROVED ROLLOVER STABILITY**
FAHRZEUGREIFEN MIT VERBESSERTER ÜBERROLLSTABILITÄT
PNEU DE VÉHICULE PRÉSENTANT UNE MEILLEURE STABILITÉ AU RENVERSEMENT

(30) Priority: 13.02.2015 GB 201502485
(43) Date of publication of application: 17.08.2016
(73) Proprietor: Apollo Tyres Global R&D B.V., 7521 PT Enschede (NL)
(72) Inventor: Issac, Renji, 7531 LG Enschede (NL); Ramamoorthy, Logesh, 7511 AJ Enschede (NL); Duraikkannan, Thineshkar, 7551 BN Hengelo (NL)
(74) Representative: Michalski Hüttermann & Partner Patentanwälte mbB

(56) References cited:
- EP-A2- 0 232 242
- JP-A- 2003 211 915

## Description

The present invention relates to a pneumatic tyre for a vehicle with a special construction of the outside shoulder.

Many vehicle tyres perform well with respect to ride comfort, rolling resistance and traction. However, when the vehicle is subjected to a near rollover situation or when extreme sinusoidal steering inputs are given, stability problems may arise. This is due to the fact that under such a situation the camber angle of the tyre is increasing - causing the shoulder area of the tyre come into contact with the road and the lateral force reaches a maximum. If the tractional force in such a situation is higher than the lateral force, then the vehicle may tend to roll over.

An introduction into the subject is given in Wielenga, T., "Tyre Properties Affecting Vehicle Rollover," SAE Technical Paper 1999-01-0126, 1999, doi:10.4271/1999-01-0126.

Electronic stability systems such as ESC, ESP or DSC that are deployed in vehicles can address potentially instable situations. However, this solution adds to the total cost of the vehicle. If adding an electronic stability system is not feasible, an alternative is to alter the structure of the tyre itself.

EP 2 080 642 A1 relates to a pneumatic tyre, comprising sidewalls on both tyre-width-direction edges of the tyre; and a tread that is located radially outward of the sidewalls, includes a cap tread, and has a surface serving as a tread surface formed of a plurality of arcs of different curvature radii, as seen in a meridional cross section thereof. It is provided that the pneumatic tyre is mounted on a normal rim and internal inflation pressure is 5% of normal internal pressure, and that the tread surface is formed of: a centre arc located in a centre portion in a tyre width direction; a shoulder-side arc located at least on a vehicle-outer side in the tyre width direction relative to the centre arc; and a shoulder arc contouring a shoulder located on an edge of the tread surface, at least on the vehicle-outer side in the tyre width direction. A value F1, expressing a relation between an outline range L1 and an extended tread width TDW, falls in a range of 0.64 ≤ F1 ≤ 0.7. A value F2, expressing a ratio of a curvature radius TR1 of the centre arc to a tyre outside diameter OD, falls in a range of 1.2 ≤ F2 ≤ 2.0. A value F3, expressing a ratio of a curvature radius TR2 of the shoulder-side arc to the curvature radius TR2 of the centre arc, falls in a range of 0.1 ≤ F3 ≤ 0.2, and a value F4, expressing a relation among an aspect ratio β, the extended tread width TDW, and a total width SW, falls in a range of 0.35 ≤ F4 ≤ 0.48. TR1 is the curvature radius of the centre arc, TR2 is the curvature radius of the shoulder-side arc, L1 is the outline range of a width from an equatorial plane to a lateral edge of the centre arc, TDW is the extended tread width being a lateral width of the tread surface, SW is the total width being a lateral width between laterally outermost portions of the sidewalls that are located on the both tyre-width-direction edges and face each other, OD is the tyre outside diameter being a largest diameter of the tread surface in a tyre diameter direction, and β is the aspect ratio.

WO 2005/044545 A1, aptly titled "Apparatus and method for reducing the likelihood of vehicle rollover", discloses a vehicle tyre having a tread and a sidewall, the tread having a radially-outwardly facing tread surface that extends generally circumferentially of the tyre and is arranged to engage a road surface, and a shoulder having a shoulder surface that extends generally radially inwardly from a side of the tread surface and faces in a direction that is generally axially of the tyre and generally perpendicular to the tread surface, the shoulder surface having a generally annular low friction region that is arranged to engage the road surface when the tyre shoulder rolls during a vehicle manoeuvre, the effective coefficient of friction of the low friction region being less than the effective coefficient of friction of said tread surface.

JP 4874378 B2 aims to provide a pneumatic tyre reducing rolling resistance and improving hydroplaning resistance, while satisfactorily maintaining/improving steering stability. Its solution is a pneumatic tyre which includes a pair of bead parts, a pair of sidewall parts extending from the bead parts to the tyre radial direction outside and a tread part located between both the sidewall parts. The tread part includes a plurality of main grooves extending in a tyre peripheral direction and a plurality of shoulder land parts arrayed in the tyre peripheral direction at the outside of the main grooves located at the tyre width direction outermost side. In the pneumatic tyre, both side parts of the shoulder land parts are deleted so that a tyre peripheral direction length may be gradually reduced from the tyre width direction outside position of a ground contact end.

JP 5223534 B2 aims to provide a pneumatic tyre reducing rolling resistance while inhibiting deterioration of manoeuvring stability. In the pneumatic tyre in which several circumferential grooves extending in the circumferential direction of the tyre are arranged in a tread part and plural rows of land parts are divided by the circumferential grooves, a plurality of sipes extending in the tyre width direction are arranged in at least one row of the land part, the sipes are made into a 3-dimensional structure in which the sipe includes a portion of a zigzag shape or a wave shape in the tread surface and diverges substantially linearly in the bottom, and the extending direction in the tread surface and the extending direction in the bottom of the sipes are arranged crosswise respective to each other.

JP 5018022 B2 is concerned with providing a pneumatic tyre capable of improving rolling resistance while maintaining motion performance, in particular, controllability and stability at a conventional level without increasing manufacturing cost. In the pneumatic tyre, the vehicle fitting direction is designated, and a recessed part annularly extended in the tyre circumferential direction is provided on the surface of a shoulder part positioned in the inner side of a vehicle. Due to the recessed part, the contour of the tyre is asymmetrical between the inner side and outer side of the vehicle with respect to the tyre equatorial plane. The cross sectional area on the tyre meridian cross section in a tyre inner side portion from the tyre equatorial plane to a carcass layer maximum width position located in the inner side of the vehicle is set smaller than the cross sectional area on the tyre meridian cross section in a tyre outer side portion from the tyre equatorial plane to a carcass layer maximum width position located in the outer side of the vehicle. A ratio of a difference between the cross sectional areas to a sum of the cross sectional areas is set within a range of 0.05 to 0.20.

US 4,265,287 discloses a pneumatic tyre having anti-transverse skid property for vehicles which run at a high speed under a heavy load comprising a depression provided in the tyre sidewall near the shoulder and for circumferentially dividing the tyre sidewall near the shoulder into a number of lands and a shoulder side groove provided in the land, the edge lines formed between the wall of the depression and shoulder side groove and the tyre sidewall outer surface being designed so that the anti-transverse skid property of the tyre is improved.

US 2012/067478 A1 relates to a pneumatic tyre that has a tread pattern including a lateral groove extending in a direction intersecting a tyre circumferential direction and a shoulder block comparted by the lateral groove. A depression region in which a plurality of depressions extending in the tyre circumferential direction are arranged in a tyre width direction are formed on a surface of the shoulder block in an outer side in the tyre width direction than a ground-contact end. The depressions are open to the lateral groove, and are segmented in a centre portion in the tyre circumferential direction of the shoulder block.

It would be desirable to improve the stability of a vehicle and in particular a car without incurring the cost of electronic stability systems. This is especially the case when a high traction tyre tread is used. The present invention has the object of providing a tyre which imparts increased rollover stability to the vehicle it is mounted onto.

According to the invention this object is achieved by a tyre according to claim 1. Further embodiments are described in the dependent claims. They may be combined freely unless the context clearly indicates otherwise.

The tyre according to the invention is a pneumatic tyre for mounting on a passenger car vehicle and for rolling in a rolling direction when mounted on the vehicle. The tyre is mounted onto a vehicle by way of mounting the tyre onto a wheel and mounting the wheel onto an axle of the vehicle. When the tyre is mounted onto the vehicle certain geometric relationships are defined. The rolling direction is the direction that the tyre surface takes when the tyre (in conjunction with the wheel) rotates around the axle of the vehicle.

The tyre according to the invention furthermore comprises a tread portion, an inside shoulder portion and an outside shoulder portion.

A tyre generally may comprise several parts. Typical parts include the tread portion, the shoulders, the sidewalls, the bead, carcass, belt and inner liner. The tread portion is the part that comes in direct contact with the road when driving. The shoulders are located between the tread and the sidewalls and act as a transition between tread and sidewall, for which reason they may be thicker than the sidewall areas.

The flexible sidewalls are located between the shoulder and bead, protect the carcass and enhance the ride. They are also used to indicate the type, size, structure, pattern, manufacturing company, product name and the like of the tyre.

The bead is the part of the tyre that attaches the tyre to the rim and wraps the end of the tyre's cord fabric. Comprised of the bead wire, core, flipper and other parts, the bead is generally designed to be slightly tight around the rim so that in the case of a sudden drop in inflation pressure, the tyre will not fall off the rim.

The carcass represents the tyre structural framework and acts to support air pressure, vertical load and absorb shocks. The breaker is a cord layer placed between the carcass and the tread in order to protect the carcass of a tyre. The breaker reduces shocks, prevents rips or injury of the tread from reaching the carcass directly while also stopping the separation between the rubber layer and the carcass.

The belt is a strong reinforcement found between the tread and the carcass in a radial or belted bias tyre. It functions much like the breaker but also increases tread rigidity by tightly winding about the carcass.

The inner liner finally is made of a layer of rubber that resists air diffusion and replaces the inner tube within a tyre. Generally made of a (halogenated) butyl rubber, the inner liner maintains the air inside the tyre.

In the tyre according to the invention the inside shoulder portion is defined as the shoulder portion of the tyre which is closer to the centre of the vehicle when the tyre is mounted on a vehicle and the outside shoulder portion is located opposite to the inside shoulder portion. Hence, the outside shoulder portion is on the other side of the tread portion with respect to the inside shoulder portion. The outside shoulder portion will come into contact with the road surface when the vehicle makes a turn towards the outside direction of the tyre. On the right hand side of the vehicle (seen in direction of vehicle's motion), this will be the case when the vehicle makes a right-hand curve and vice versa.

The tyre according to the invention has the features that the outside shoulder portion comprises a plurality of depressions arranged sequentially with respect to the rolling direction of the tyre, wherein
each depression has a length in the rolling direction of the tyre and a width perpendicular to the rolling direction of the tyre and the ratio of length to width in each depression (80) is ≥ 0.65:1 to ≤ 1:1,
each depression having a depth, relative to its surrounding section of the outside shoulder portion, of ≥ 0.5 mm and
wherein the tread portion comprises a rubber material with a first glass transition temperature of ≥ -25 °C to ≤ -5 °C and a first loss factor tan δ ≥ 0.25 to ≤ 0.50 at 0° C and
the outside shoulder portion comprises a rubber material with a second glass transition temperature of ≤ -40 °C and a second loss factor tan δ ≥ 0.1 to ≤ 0.3 at 0° C,
the first loss factor being greater than the second loss factor.

When the coefficient of friction between the tyre and the road is large, the cornering forces on the front and rear outside tyres tends to brake the tyre and act as a pivot axis about which the centrifugal force tends to rotate the vehicle in the roll plane away from the turn centre, or the vehicle tends to roll. The cornering forces build up and friction needs to be controlled at the rollover threshold point in order to avoid rollover. In the rollover condition, the camber angle of the tyre is high, causing the shoulder of the tyre to come into contact with the road. At this stage, the cornering force of the tyre due to slip angle is also reaching towards the maximum.

The depressions in the outside shoulder portion of the tyre according to the invention have the effect that the area of the shoulder that comes into contact with the road under the aforementioned conditions is reduced. This is due to the nature of the depressions which have a sufficient depth so that the material at the bottom of the depression cannot participate in building up friction with the road. Then the braking forces due to the contact of the shoulder with the road are also reduced, leading to an increase in stability.

The depressions are distinguished from circumferential grooves on the shoulder portion of the tyre by the fact that they are discrete in shape. Each depression is surrounded by non-depressed material. Furthermore, the ratio of length to width in each depression is ≥ 0.65:1 to ≤ 1:1, preferably ≥ 0.7:1 to ≤ 1:1, more preferred ≥ 0.8:1 to ≤ 1:1. This distinguishes the depressions from outwardly directed grooves on the tyre.

With respect to the depth of each depression, a value, relative to its surrounding section of the outside shoulder portion, of ≥ 0.5 mm to ≤ 2.0 mm or ≥ 0.5 mm to ≤ 1.73 mm is preferred.

Regarding the material properties of the rubber for the tread and the rubber for the shoulder portion, it is believed that the combination of the first glass transition temperature and the first loss factor impart what is generally understood as "high traction" behaviour onto the rubber for the tread. Likewise, the combination of the second glass transition temperature and the second loss factor leads to a lower traction of the rubber for the shoulder. Acting in synergy with the reduction in braking forces when the shoulder contacts the road, the rollover stability of the vehicle is increased.

The glass transition temperature and the loss factor (the quotient E"/E' of the loss modulus E" and the storage modulus E') may be determined according to ISO 4664-1 at a heating rate of 2 °C/min.

It is preferred that the first loss factor tan δ is ≥ 0.35 to ≤ 0.45 at 0 °C. It is also preferred that the second loss factor tan δ is ≥ 0.15 to ≤ 0.25 at 0 °C.

The present invention will be described in more detail with reference to the following figures and examples without wishing to be limited by them.
FIG. 1 shows a profile of a tyre according to the invention and a cross-sectional view
FIG. 2 shows a section of a profile of a tyre according to the invention in cross-sectional view
FIG. 3 shows test data of cornering force vs. slip angle when the camber angle is zero.
FIG. 4 shows further test data of cornering force vs. slip angle when the camber angle is high

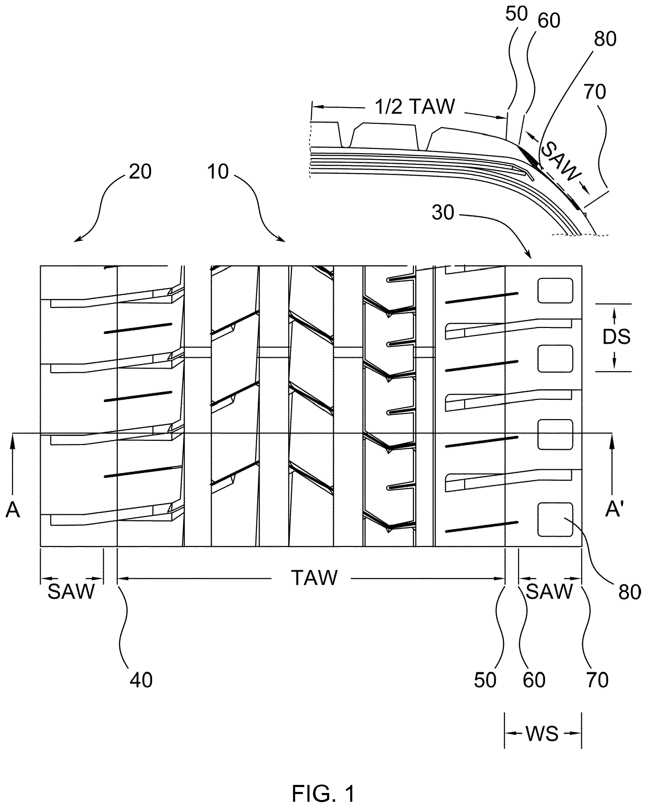

FIG. 1 schematically shows a profile of a tyre according to the invention together with part of a cross-sectional view of the profile. The profile comprises the tread portion 10, the inside shoulder portion 20 and the outside shoulder portion 30. While the inside shoulder 20 is depicted here as being different from the outside shoulder portion 20, it is within the scope of the invention that the inside shoulder portion also has the characteristics of the outside shoulder portion.

The cross-sectional view depicted over the profile is the right half of the cross-section as indicated by the line A-A'. The tread arc width of the profile is indicated by the distance TAW in the profile. Accordingly, the depicted half of the cross-section displays one half of the tread angle width, denoted as ½ TAW. Likewise, the shoulder arc widths are denoted as SAW. The tread arc of the tyre profile extends from the starting point 40 to the end point 50 and may have more than one radius of curvature. Similarly, the sidewall arc may have one or more radius of curvature.

Furthermore, the outside shoulder portion 30 comprises a plurality of depressions 80 which are arranged sequentially with respect to the rolling direction of the tyre. As indicated above, these depressions reduce the surface area of the shoulder which can come into contact with the road surface. The outside shoulder portion 30 comprising the depressions 80 may be in the form of wing tips. In a typical passenger car tyre, each depression 80 is located 4 mm from the end of the shoulder area 70. This distance is not restricted, however, and may change with respect to the individual tyre size.

The depressions need not have a constant depth throughout, but may have different depths at different location along the width of the depression. The higher values could be closer to point 60 and lower values close to point 70.

In one embodiment the rubber material of the outside shoulder portion 30 comprises polybutadiene rubber and/or natural rubber with carbon black filler.

In another embodiment, the rubber material of the tread portion 10 comprises solution SBR, emulsion SBR, polybutadiene rubber and/or natural rubber and furthermore carbon black filler.

In another embodiment which is not depicted in FIG. 1, the tread portion 10 has a tread curvature arc with a starting point 40 and an end point 50, the outside shoulder portion 30 has a shoulder curvature arc with a starting point at the end point 50 of the tread curvature arc and an end point 70. The tread curvature arc and the shoulder curvature arc may have more than one radius of curvature.

In another embodiment, the tread portion 10 has a tread curvature arc with a starting point 40 and an end point 50, the outside shoulder portion 30 has a shoulder curvature arc with a starting point 60 and an end point 70 of the shoulder curvature arc, the starting point of the shoulder curvature arc 60 being adjacent to the end point of the tread curvature arc 50 and the end point of the shoulder curvature arc 70 being opposite to the end point of the tread curvature arc 50. The space between points 50 and 60 may be characterised as a transition region between the tread 10 and outside shoulder 30. It is possible that this transition region comprises a different material than the tread 10 and/or the outside shoulder 30. In this embodiment it is also possible that the tread curvature arc and the shoulder curvature arc have more than one radius of curvature. Furthermore, it is preferred that the starting point of the shoulder curvature arc 60 has a distance of > 0 mm to ≤ 12 mm, preferably > 1 mm to ≤ 10 mm, from the end point of the tread curvature arc 50. If the outside shoulder portion is in the form of wing tips, this embodiment may be understood as moving the wing tips closer to the tread. Conventionally located wing tips have a greater distance to the tread.

The tyre profile as depicted in FIG. 1 also comprises grooves, reinforcement layers and the like but they are not in the focus of the invention and do not merit further discussion.

In another embodiment, the individual depressions 80 are spaced apart by a distance DS and each depression 80 has a length in the rolling direction of the tyre of ≥ 30% of DS to ≤ 45% of DS. Preferred is a length of ≥ 32 % of DS to ≤ 40 % of DS.

In another embodiment, a width WS is defined as the distance between the end point 50 of the tread curvature arc and the end point 70 of the shoulder curvature arc and each depression 80 has a width perpendicular to the rolling direction of the tyre of ≥ 40% of WS to ≤ 50% of WS. Preferred is a width of ≥ 42% of WS to ≤ 48% of WS.

In another embodiment, the average maximum cornering force, determined by measuring the lateral force against slip angle on a flat track machine at a camber angles of 6 degrees in direction of the outside shoulder portion 30, is ≥ 10% lower than the average maximum cornering force determined using a reference tyre with the same structure but missing the depressions 80. By way of an example, the average maximum cornering force, determined according to measurement of lateral force against slip angle on a flat track machine at a camber angle of 6 degrees in direction of the outside shoulder portion 30 may be ≤ 5920 N with a tyre with the depressions while the tyre without the depressions has a maximum cornering force 6950 N. The change in maximum cornering force can have another value in a different tyre with respect tyre size and dimension of depression and camber value.

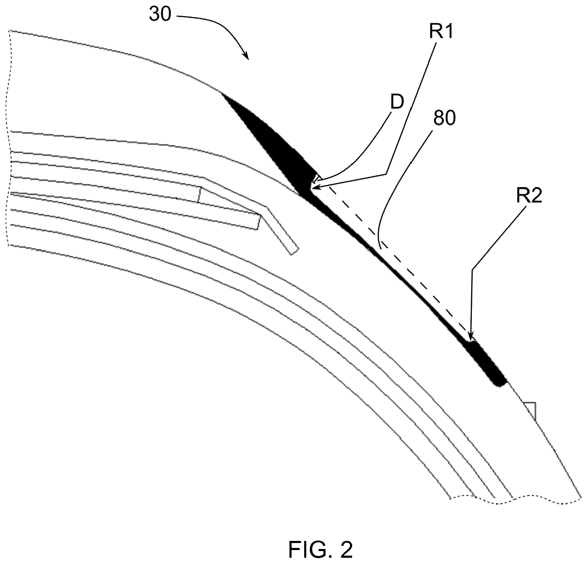

FIG. 2 shows an enlarged view of a shoulder area of a tyre according to the invention with respect to another embodiment. As before, a depression 80 is located in the shoulder portion 30. With respect to the depth of each depression, as shown here, R1+ D stands for the vertical depth at the beginning of the depression, R2 is the radius at the end portion and R1 and R2 are connected by an arc or a straight line. The value of Rl+D is preferably ≤ 2.2 mm and ≥ 1.5, preferred value 1.7 mm, R2 preferably has a value of 0.5 mm.

### Examples

The relation between the slip angle and the cornering force (lateral force) for a tyre according to the invention and a comparison tyre without depressions in the outside shoulder position was determined experimentally on a flat track machine. The lateral force of the tyre at various slip angles were measured and plotted. In vehicle dynamics, slip angle or sideslip angle is the angle between a rolling wheel's actual direction of travel and the direction towards which it is pointing (i.e., the angle of the vector sum of wheel forward velocity *v*ₓ and lateral velocity *v*_{y}). For a free-rolling wheel this slip angle results in a force parallel to the axle and the component of the force perpendicular to the wheel's direction of travel is the cornering force.

A tyre according to the invention and a reference tyre with the same structure, but without the depressions, were used. The other test conditions followed for study as follows:
Rim width: 6 x 15
Tyre size: 195/60R15 88V
Inflation pressure: 230 kPa

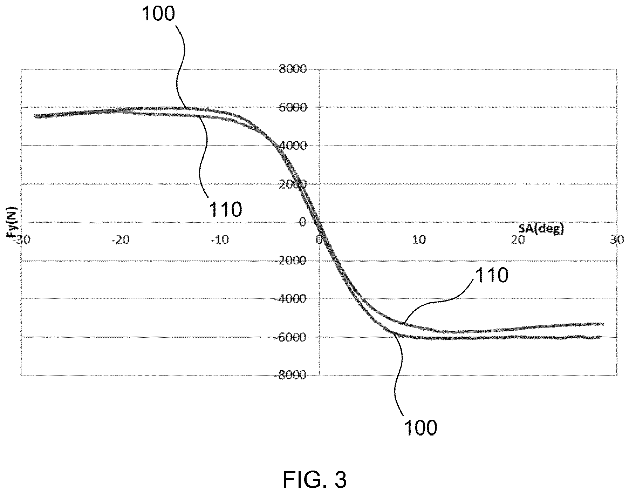

FIG. 3 shows the experimental data for a camber angle of the tyres of 0 degrees. The slip angle SA is represented on the x-axis and the cornering force *F*_{y} (in Newton) is represented on the y-axis. Curve 100 is associated with the comparison tyre and curve 110 is associated with the tyre according to the invention.

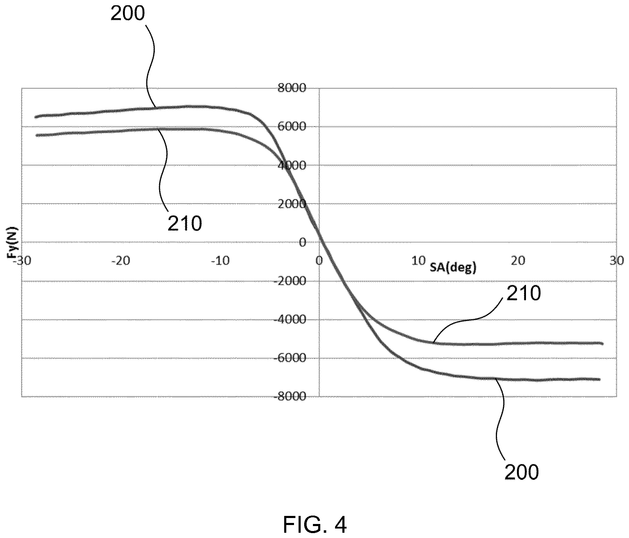

FIG. 4 shows the experimental data for a camber angle of the tyres of 6 degrees. In a near rollover situation, the slip angle of the tyre is high and the camber angle of the tyre tire is also increasing. Hence the graphs depict the near rollover situation when the slip angle increases to a higher value. The slip angle SA is represented on the x-axis and the cornering force *F*_{y} (in Newton) is represented on the y-axis. The outside shoulder of the comparison tyre and the outside shoulder comprising the depressions of the tyre according to the invention now come into contact with the simulated road surface. Curve 200 is associated with the comparison tyre and curve 210 is associated with the tyre according to the invention. It can be seen that the cornering stiffness of the tyre (cornering force at 1 degree slip angle) for a tyre according to the invention remains the same while the maximum values at higher slip angles are considerably reduced at the 6 degree camber angle.

The tyre according to the invention was also tested for rollover with an outdoor testing procedure. The tyre had four pitches with corresponding depressions (cf. reference numeral 80 in FIG. 1) with a length/width ratio of 0.71, 0.77, 0.86 and 0.97. The minimum depth in all depressions was 0.7 mm. The material of the tread portion (cf. reference numeral 10 in FIG. 1) had a loss factor tan δ of 0.36 at 0 °C and a glass transition temperature of -24 °C. The material of the shoulder portion (cf. reference numeral 30 in FIG. 1) had a loss factor tan δ of 0.19 at 0 °C and a glass transition temperature of -47 °C.

The testing procedure was performed with a car with normal loading with outriggers to prevent rollover. The car is driven at a constant speed of 100-140 kph. At this constant speed, multiple sequential sinusoidal input is given to the steering to make the rear axle unstable and make it lift. If the outrigger makes contact with the road due to above input, the roll stability test was failed. If the outrigger does not make contact with the road, the roll stability test was successful.

Once the car was equipped with the test tyres according to the invention as described above, the test was successful, whereas the car equipped with tyres without depressions and with different material properties of the shoulder and tread failed the test.

By restricting the maximum cornering force for the tyre the vehicle will rather slide than roll over. In summary, the tyre according to the invention allows the usage of high traction tread compounds to reach the demands on handling and safety-related performances without hampering the roll stability.

The tyre according to the invention may be manufactured by standard moulding processes where the mould comprises corresponding elevations on its sidewall portion to impress the depressions into the rubber of the outer sidewall portion.

## Claims

1. A pneumatic tyre for mounting on a passenger car vehicle and for rolling in a rolling direction when mounted on the vehicle,
the tyre comprising a tread portion (10), an inside shoulder portion (20) and an outside shoulder portion (30),
the inside shoulder portion (20) being defined as the shoulder portion of the tyre which is closer to the centre of the vehicle when the tyre is mounted on a vehicle and
the outside shoulder portion (30) being located opposite to the inside shoulder portion (20);
**characterised in that**
the outside shoulder portion (30) comprises a plurality of depressions (80) arranged sequentially with respect to the rolling direction of the tyre, wherein
each depression (80) has a length in the rolling direction of the tyre and a width perpendicular to the rolling direction of the tyre and the ratio of length to width in each depression (80) is ≥ 0.65:1 to ≤ 1:1,
each depression (80) having a depth, relative to its surrounding section of the outside shoulder portion (30), of ≥ 0.5 mm and
wherein the tread portion (10) comprises a rubber material with a first glass transition temperature of ≥ -25 °C to ≤ -5 °C and a first loss factor tan δ ≥ 0.25 to ≤ 0.50 at 0° C and
the outside shoulder portion (30) comprises a rubber material with a second glass transition temperature of ≤ -40 °C and a second loss factor tan δ ≥ 0.1 to ≤ 0.3 at 0° C,
the first loss factor being greater than the second loss factor.

2. The tyre according to claim 1, wherein the first loss factor tan δ is ≥ 0.35 to ≤ 0.45 at 0 °C.

3. The tyre according to claim 1 or 2, wherein the second loss factor tan δ is ≥ 0.15 to ≤ 0.25 at 0 °C.

4. The tyre according to one of claims 1 to 3, wherein the rubber material of the outside shoulder portion (30) comprises polybutadiene rubber and/or natural rubber with carbon black filler.

5. The tyre according to one of claims 1 to 4, wherein the tread portion (10) has a tread curvature arc with a starting point (40) and an end point (50), the outside shoulder portion (30) has a shoulder curvature arc with a starting point at the end point (50) of the tread curvature arc and an end point (70).

6. The tyre according to one of claims 1 to 4, wherein
the tread portion (10) has a tread curvature arc with a starting point (40) and an end point (50),
the outside shoulder portion (30) has a shoulder curvature arc with a starting point (60) and an end point (70) of the shoulder curvature arc,
the starting point of the shoulder curvature arc (60) being adjacent to the end point of the tread curvature arc (50) and
the end point of the shoulder curvature arc (70) being opposite to the end point of the tread curvature arc (50).

7. The tyre according to claim 6, wherein the starting point of the shoulder curvature arc (60) has a distance of > 0 mm to ≤ 12 mm from the end point of the tread curvature arc (50).

8. The tyre according to one of claims 1 to 5, wherein the individual depressions (80) are spaced apart by a distance DS and each depression (80) has a length in the rolling direction of the tyre of ≥ 30% of DS to ≤ 45% of DS.

9. The tyre according to one of claims 5 to 8, wherein a width WS is defined as the distance between the end point (50) of the tread curvature arc and the end point (70) of the shoulder curvature arc and each depression (80) has a width perpendicular to the rolling direction of the tyre of ≥ 40% of WS to ≤ 50% of WS.

10. The tyre according to one of claims 1 to 9, wherein the average maximum cornering force, determined by measuring the lateral force against slip angle on a flat track machine at a camber angles of 6 degrees in direction of the outside shoulder portion (30), is ≥ 10% lower than the average maximum cornering force determined using a reference tyre with the same structure but missing the depressions (80).

## Patentansprüche

1. Luftreifen zur Montage an einem Personenkraftwagen und für eine Rollbewegung in einer Rollrichtung, wenn der Reifen am Fahrzeug montiert ist,
wobei der Reifen einen Laufflächenabschnitt (10), einen innenseitigen Schulterabschnitt (20) und einen außenseitigen Schulterabschnitt (30) aufweist,
wobei der innenseitige Schulterabschnitt (20) als der Schulterabschnitt des Reifens definiert ist, der näher zur Mitte des Fahrzeugs angeordnet ist, wenn der Reifen an einem Fahrzeug montiert ist, und
der außenseitige Schulterabschnitt (30) gegenüberliegend dem innenseitigen Schulterabschnitt (20) angeordnet ist;
**dadurch gekennzeichnet, dass**
der außenseitige Schulterabschnitt (30) mehrere Vertiefungen (80), aufweist, die bezüglich der Rollrichtung des Reifens sequentiell angeordnet sind, wobei
jede Vertiefung (80) eine Länge in der Rollrichtung des Reifens und eine Breite senkrecht zur Rollrichtung des Reifens aufweist, wobei das Verhältnis zwischen der Länge und der Breite jeder Vertiefung (80) ≥ 0,65:1 bis ≤ 1:1 beträgt,
jede Vertiefung (80) eine Tiefe relativ zu ihrem umgebenden Abschnitt des außenseitigen Schulterabschnitts (30) von ≥ 0,5 mm hat, und
wobei der Laufflächenabschnitt (10) ein Gummimaterial mit einer ersten Glasübergangstemperatur von ≥ -25°C bis ≤ -5°C und mit einem ersten Verlustfaktor tan δ ≥ 0,25 bis ≤ 0,50 bei 0°C aufweist, und
der außenseitige Schulterabschnitt (30) ein Gummimaterial mit einer zweiten Glasübergangstemperatur von ≤ -40°C und mit einem zweiten Verlustfaktor tan δ ≥ 0,1 bis ≤ 0,3 bei 0°C aufweist,
wobei der erste Verlustfaktor größer ist als der zweite Verlustfaktor.

2. Reifen nach Anspruch 1, wobei der erste Verlustfaktor tan δ ≥ 0,35 bis ≤ 0,45 bei 0°C ist.

3. Reifen nach Anspruch 1 oder 2, wobei der zweite Verlustfaktor tan δ ≥ 0,15 bis ≤ 0,25 bei 0°C ist.

4. Reifen nach einem der Ansprüche 1 bis 3, wobei das Gummimaterial des außenseitigen Schulterabschnitts (30) Polybutadienkautschuk und/oder natürlichen Gummi mit Rußfüllstoff aufweist.

5. Reifen nach einem der Ansprüche 1 bis 4, wobei der Laufflächenabschnitt (10) einen Laufflächenkrümmungsbogen mit einem Startpunkt (40) und einem Endpunkt (50) aufweist, wobei der außenseitige Schulterabschnitt (30) einen Schulterkrümmungsbogen mit einem Startpunkt am Endpunkt (50) des Laufflächenkrümmungsbogens und mit einem Endpunkt (70) aufweist.

6. Reifen nach einem der Ansprüche 1 bis 4, wobei der Laufflächenabschnitt (10) einen Laufflächenkrümmungsbogen mit einem Startpunkt (40) und einem Endpunkt (50) aufweist,
wobei der außenseitige Schulterabschnitt (30) einen Schulterkrümmungsbogen mit einem Startpunkt (60) und einem Endpunkt (70) des Schulterkrümmungsbogens aufweist,
wobei der Startpunkt des Schulterkrümmungsbogens (60) benachbart zum Endpunkt des Laufflächenkrümmungsbogens (50) angeordnet ist, und
wobei der Endpunkt des Schulterkrümmungsbogens (70) gegenüberliegend dem Endpunkt des Laufflächenkrümmungsbogens (50) angeordnet ist.

7. Reifen nach Anspruch 6, wobei der Startpunkt des Schulterkrümmungsbogens (60) einen Abstand von > 0 mm bis ≤ 12 mm vom Endpunkt des Laufflächenkrümmungsbogens (50) hat.

8. Reifen nach einem der Ansprüche 1 bis 5, wobei die einzelnen Vertiefungen (80) in einem Abstand DS beabstandet sind und jede Vertiefung (80) eine Länge in der Rollrichtung des Reifens von ≥ 30% von DS bis ≤ 45% von DS aufweist.

9. Reifen nach einem der Ansprüche 5 bis 8, wobei eine Breite WS als der Abstand zwischen dem Endpunkt (50) des Laufflächenkrümmungsbogens und dem Endpunkt (70) des Schulterkrümmungsbogens definiert ist und jede Vertiefung (80) eine Breite senkrecht zur Rollrichtung des Reifens von ≥ 40% von WS bis ≤ 50% von WS aufweist.

10. Reifen nach einem der Ansprüche 1 bis 9, wobei die durchschnittliche maximale Seitenführungskraft, die durch Messen der Querkraft gegen den Schlupfwinkel auf einer Flachbahnmaschine bei einem Sturzwinkel von 6 Grad in Richtung des außenseitigen Schulterabschnitts (30) bestimmt wird, ≥ 10% niedriger ist als die durchschnittliche maximale Seitenführungskraft, die unter Verwendung eines Referenzreifens mit der gleichen Struktur, aber ohne die Vertiefungen (80) bestimmt wird.

## Revendications

1. Pneumatique à monter sur un véhicule particulier et pour rouler dans une direction de roulement quand il est monté sur le véhicule,
le pneumatique comprenant une portion de chape (10), une portion d'épaulement intérieur (20) et une portion d'épaulement extérieur (30),
la portion d'épaulement intérieur (20) étant définie comme la portion d'épaulement du pneumatique qui est plus proche du centre du véhicule lorsque le pneumatique est monté sur un véhicule et
la portion d'épaulement extérieur (30) étant située à l'opposé de la portion d'épaulement intérieur (20) ;
**caractérisé en ce que**
la portion d'épaulement extérieure (30) comprend une pluralité de dépressions (80) disposées séquentiellement par rapport à la direction de roulement du pneumatique, dans lequel
chaque dépression (80) a une longueur dans la direction de roulement du pneumatique et une largeur perpendiculaire à la direction de roulement du pneumatique et le rapport de la longueur sur la largeur dans chaque dépression (80) est ≥ 0.65 :1 à ≤ 1 :1,
chaque dépression (80) ayant une profondeur par rapport à sa section environnante de la portion d'épaulement extérieure (30), de ≥ 0.5 mm et
dans lequel la portion de chape (10) comprend un matériau caoutchouteux avec une première température de transition vitreuse de ≥ -25 °C à ≤ -5 °C et un premier facteur de perte tan δ ≥ 0.25 à ≤ 0.50 à 0 °C et
la portion d'épaulement extérieure (30) comprend un matériau caoutchouteux avec une seconde température de transition vitreuse de ≤ -40 °C et un second facteur de perte tan δ ≥ 0.1 à ≤ 0.3 à 0 °C,
le premier facteur de perte étant supérieur au second facteur de perte.

2. Pneumatique selon la revendication 1, dans lequel le premier facteur de perte tan δ est ≥ 0.35 à ≤ 0.45 à 0 °C.

3. Pneumatique selon la revendication 1 ou 2, dans lequel le second facteur de perte tan δ est ≥ 0.15 à ≤ 0.25 à 0 °C.

4. Pneumatique selon une des revendications 1 à 3, dans lequel le matériau caoutchouteux de la portion d'épaulement extérieure (30) comprend du caoutchouc butadiène et/ou du caoutchouc naturel avec une charge de noir de carbone.

5. Pneumatique selon une des revendications 1 à 4, dans lequel la portion de chape (10) a un arc de courbure de chape avec un point de début (40) et un point de fin (50), la portion d'épaulement extérieure (30) a un arc de courbure d'épaulement avec un point de début au niveau du point de fin (50) de l'arc de courbure de chape et un point de fin (70).

6. Pneumatique selon une des revendications 1 à 4, dans lequel
la portion de chape (10) a un arc de courbure de chape avec un point de début (40) et un point de fin (50),
la portion d'épaulement extérieure (30) a un arc de courbure d'épaulement avec un point de début (60) et un point de fin (70) de l'arc de courbure d'épaulement,
le point de début de l'arc de courbure d'épaulement (60) étant adjacent au point de fin de l'arc de courbure de chape (50) et
le point de fin de l'arc de courbure d'épaulement (70) étant opposé au point de fin de l'arc de courbure de chape (50).

7. Pneumatique selon la revendication 6, dans lequel le point de début de l'arc de courbure d'épaulement (60) a une distance de > 0 mm à ≤ 12 mm par rapport au point de fin de l'arc de courbure de chape (50).

8. Pneumatique selon une des revendications 1 à 5, dans lequel les dépressions individuelles (80) sont espacées les unes des autres par une distance DS et chaque dépression (80) a une longueur dans la direction de roulement du pneumatique de ≥ 30 % de DS à ≤ 45 % de DS.

9. Pneumatique selon une des revendications 5 à 8, dans lequel une largeur WS est définie comme la distance entre le point de fin (50) de l'arc de courbure de chape et le point de fin (70) de l'arc de courbure d'épaulement et chaque dépression (80) a une largeur perpendiculaire à la direction de roulement du pneumatique de ≥ 40 % de WS à ≤ 50 % de WS.

10. Pneumatique selon une des revendications 1 à 9, dans lequel la force de virage maximale moyenne déterminée en mesurant la force latérale par rapport à un angle de dérapage sur une piste d'essai à un angle de carrossage de 6 degrés dans la direction de la portion d'épaulement extérieure (30) est ≥ 10 % inférieure à la force de virage maximale moyenne déterminée en utilisant un pneumatique de référence avec la même structure mais exempt de dépressions (80).
